# EUROPÄISCHE PATENTANMELDUNG

(11) **EP 3 659 476 A1**
(43) Veröffentlichungstag der Anmeldung: **03.06.2020**
(21) Anmeldenummer: 19207587.7
(22) Anmeldetag: 07.11.2019
(51) Int. Cl.: A47J 31/46, F16K 3/08, F16K 3/10, F16K 11/074, F16K 31/04

(54) **VENTILEINHEIT UND GETRÄNKEAUTOMAT MIT EINER VENTILEINHEIT**

(30) Priorität: 28.11.2018 DE 102018130047
(71) Anmelder: Miele & Cie. KG, 33332 Gütersloh (DE)
(72) Erfinder: Nijsen, Andrea Jacobus Louis, 7521 AT Enschede (NL); van Boxtel, Jaap Jozua, 3853 BV Ermelo (NL); van der Kamp, Hedzer Michiel Adriaan, 7205 GJ Zutphen (NL)

(57) **Zusammenfassung**

Es wird eine Ventileinheit (1) vorgestellt, umfassend ein Gehäuse (2) mit mindestens einem Zulaufanschluss (3) und wenigstens einem Ablaufanschluss (4), die Bestandteile eines mit dem Gehäuse (2) verbundenen Ventilkopfes (5) sind, wobei:
-innerhalb des Gehäuses (2) mindestens eine, Strömungsöffnungen (6) aufweisende, erste Ventilscheibe (7) drehbar gelagert ist, um in Abhängigkeit von ihrer Stellung in Zusammenwirkung mit einer weiteren, feststehend angeordneten und mit Durchlassöffnungen (8) versehenen Ventilscheibe (9) verschiedene Fluidströmungswege freizugeben oder zu verschließen,
-eine Übertragungsmechanik (10) zur Übertragung der von einem Antrieb (11) erzeugten Drehbewegung auf die drehbar gelagerte Ventilscheibe (7) vorhanden ist,
-zwischen der weiteren, feststehend angeordneten Ventilscheibe (9) und der dieser zugewandten Seite des Ventilkopfes (5) eine elastisch verformbare Dichtung (12) angeordnet ist,
-eine Druckfeder (13) zur Erzeugung einer definierten Druckkraft auf die drehbar gelagerte Ventilscheibe (7) vorhanden ist.
Erfindungsgemäß wird vorgeschlagen, dass zur Übertragung der von der Druckfeder (13) erzeugten Druckkraft auf die drehbar gelagerte, erste Ventilscheibe (7) wenigstens ein Übertragungsmittel (14, 15, 16) vorhanden ist.

Gegenstand der Erfindung ist ferner ein Getränkeautomat (21) mit einer derartigen Ventileinheit (1).

## Beschreibung

Die Erfindung betrifft eine Ventileinheit und einen Getränkeautomaten mit einer Ventileinheit. Bei dem Getränkeautomaten kann es sich dabei zum Beispiel um einen Kaffeevollautomaten handeln.

Eine Ventileinheit zur Verwendung für einen Getränkeautomaten, insbesondere zum Einsatz in einem Kaffeevollautomaten, wird beispielsweise in der DE 10 2014 205 269 A1 beschrieben. Die in dieser Druckschrift offenbarte Ventileinheit umfasst ein durch einen Deckel verschließbares Gehäuse mit mindestens einem Zulaufanschluss und wenigstens einem Ablaufanschluss, wobei über den Zulaufanschluss und den Ablaufanschluss beispielsweise heißes Wasser oder Dampf zugeführt beziehungsweise abgeführt wird. Innerhalb des Gehäuses sind bei dieser Lösung zwei, als Verteilerscheiben bezeichnete, feststehend angeordnete, keramische Ventilscheiben vorhanden, zwischen denen sich eine weitere, verstellbare und als Steuerscheibe bezeichnete Ventilscheibe befindet, die ebenfalls aus einem Keramikwerkstoff besteht. Die vorhandenen Ventilscheiben weisen jeweils Strömungsöffnungen beziehungsweise Durchlassöffnungen auf, sodass durch eine Drehbewegung der verstellbaren Ventilscheibe in Abhängigkeit von ihrer Stellung verschiedene Fluidströmungswege freigegeben oder verschlossen werden können. Die Baueinheit, bestehend aus den beiden feststehend angeordneten Ventilscheiben mit der dazwischen befindlichen, verstellbar ausgeführten Ventilscheibe wird von zwei elastisch verformbaren Dichtungen eingeschlossen, die in axialer Richtung betrachtet, an der Außenseite der feststehend angeordneten Ventilscheiben anliegen, wobei eine dieser Dichtungen zusätzlich in einem Dichtungsträger aufgenommen ist, der über eine sich in dem Gehäuse abstützende Druckfeder eine Druckkraft auf diese Dichtung ausübt, sodass dadurch die Anlage der Ventilscheiben aneinander insgesamt mit der genannten Druckkraft der Druckfeder beaufschlagt wird. Die aufgebrachte Druckkraft ist beispielsweise erforderlich, um Leckagen zu vermeiden. Nachteilig ist bei dieser Ventileinheit jedoch, dass sie sehr komplex aufgebaut ist, mehrere Dichtungen erfordert, um die Ventilscheiben mittels des Dichtungsträgers gegeneinander zu pressen und der Dichtungsträger lediglich mittelbar die Druckkraft auf die Ventilscheiben überträgt. Damit lässt sich die Druckkraft nur verhältnismäßig ungenau einstellen und vorherbestimmen.

Eine weitere Ventileinheit geht darüber hinaus aus der DE 10 2012 022 212 A1 hervor. Die in dieser Druckschrift beschriebene und als "Mehrwege-Regulierventil" bezeichnete Ventileinheit umfasst ein Gehäuse mit mindestens einem Zulaufanschluss und wenigstens einem Ablaufanschluss. In dem Gehäuse ist eine Kammer vorhanden, in der eine, Strömungsöffnungen aufweisende, erste Ventilscheibe drehbar gelagert ist, um in Abhängigkeit von ihrer Stellung in Zusammenwirkung mit einer weiteren, feststehend angeordneten und mit Durchlassöffnungen versehenen Ventilscheibe verschiedene Fluidströmungswege freizugeben oder zu verschließen. Die Ventilscheiben bestehen dabei jeweils bevorzugt aus einem Keramikwerkstoff. Die Drehbewegung der verstellbaren Ventilscheibe wird nach dem Offenbarungsgehalt der Druckschrift über eine Steuerwelle auf die Ventilscheibe übertragen, sodass die Steuerwelle damit einen Teil einer Übertragungsmechanik zur Übertragung der von einem Antrieb erzeugten Drehbewegung auf die drehbar gelagerte Ventilscheibe darstellt. Mithilfe einer Druckfeder wird darüber hinaus eine Druckkraft auf die drehbar angeordnete Ventilscheibe ausgeübt, sodass diese direkt mit der genannten Druckkraft beaufschlagt ist und gegen die feststehend angeordnete Ventilscheibe gepresst wird. Unterhalb der feststehend angeordneten Ventilscheibe ist in dem Gehäuse der Ventileinheit darüber hinaus eine elastisch verformbare Profildichtung vorhanden.

Bei dieser Lösung hat es sich als nachteilig herausgestellt, dass die Druckfeder unmittelbar in der Fluide führenden Kammer angeordnet ist, sodass damit ein vorzeitiger Verschleiß der beweglichen Elemente nicht ausgeschlossen werden kann. Darüber hinaus unterliegt die Druckfeder in der Fluide führenden Kammer erheblichen Temperaturschwankungen und Feuchtigkeitseinflüssen, die, über die Lebensdauer hinweg betrachtet, zu einer Beeinträchtigung der Federwirkung führen können. Weiterhin ist festzustellen, dass die unmittelbare Auflage der Druckfeder auf der verstellbaren Ventilscheibe zu einem erhöhten Abrieb in diesem Bereich führt.

Die möglichst genaue Einstellung der auf die Ventilscheiben mittels einer Druckfeder ausgeübten Druckkraft ist zur Vermeidung von Leckagen auch deshalb von Bedeutung, weil insbesondere bei Stillstandszeiten eine Tendenz zum Festhaften beziehungsweise Verkleben der Ventilscheiben zu beobachten ist, sodass es sogar vorkommen kann, dass sich die Ventilscheiben bei erneuter Inbetriebnahme der Ventileinheit nur schwer oder überhaupt nicht mehr voneinander lösen lassen. Dies kann zu Beschädigungen bis hin zur vollständigen Zerstörung einzelner Komponenten des Ventils, beispielsweise Ventilscheiben, führen und ist insbesondere bei der Verwendung in Getränkeautomaten zu beobachten, da hier hohe Temperaturschwankungen auftreten können und zum Teil eiweißhaltige oder zuckerhaltige Medien verarbeitet werden. Zum Teil kann hierbei auch der in dem verwendeten Wasser vorhandene Kalk eine wesentliche Rolle spielen.

Der Erfindung stellt sich somit das Problem, die miteinander korrespondierenden Ventilscheiben einer Ventileinheit mit einer Druckkraft zu beaufschlagen, die exakt einstellbar und auch unter dem Einfluss hoher Temperaturen oder unter Feuchtigkeitseinflüssen beständig ist.

Erfindungsgemäß wird dieses Problem durch eine Ventileinheit und einen Getränkeautomaten mit einer solchen Ventileinheit mit den Merkmalen der unabhängigen Patentansprüche 1 und 19 gelöst. Vorteilhafte Ausgestaltungen und Weiterbildungen der Erfindung ergeben sich aus den Unteransprüchen.

Eine Ventileinheit, umfassend ein Gehäuse mit mindestens einem Zulaufanschluss und wenigstens einem Ablaufanschluss, die Bestandteile eines mit dem Gehäuse verbundenen Ventilkopfes sind und bei der innerhalb des Gehäuses mindestens eine, Strömungsöffnungen aufweisende, erste Ventilscheibe drehbar gelagert ist, um in Abhängigkeit von ihrer Stellung in Zusammenwirkung mit einer weiteren, feststehend angeordneten und mit Durchlassöffnungen versehenen Ventilscheibe verschiedene Fluidströmungswege freizugeben oder zu verschließen, bei der ferner eine Übertragungsmechanik zur Übertragung der von einem Antrieb erzeugten Drehbewegung auf die drehbar gelagerte Ventilscheibe vorhanden ist, wobei zwischen der weiteren, feststehend angeordneten Ventilscheibe und der dieser zugewandten Seite des Ventilkopfes eine elastisch verformbare Dichtung angeordnet ist und eine Druckfeder zur Erzeugung einer definierten Druckkraft auf die drehbar gelagerte Ventilscheibe vorhanden ist, wurde erfindungsgemäß dahingehend weitergebildet, dass zur Übertragung der von der Druckfeder erzeugten Druckkraft auf die drehbar gelagerte, erste Ventilscheibe wenigstens ein Übertragungsmittel vorhanden ist.

Die erfindungsgemäße Lösung geht folglich dahin, die von der Druckfeder erzeugte, zur Vermeidung von Leckagen erforderliche Druckkraft nicht unmittelbar auf eine der Ventilscheiben einwirken zu lassen, sondern mittelbar. Die mittelbare Übertragung der Druckkraft auf eine der Ventilscheiben erfolgt allerdings auf die Ventilscheiben selbst und nicht, wie dies bei den eingangs beschriebenen, bekannten Lösungen der Fall ist, auf eine zusätzliche Dichtung, die zur Verfälschung der übertragenen Druckkraft führt. Folglich weist die Erfindung eine Trennung der Druckkraft von der Dichtung auf. Das Übertragungsmittel ist unmittelbar durch die Druckkraft der Druckfeder vorgespannt, sodass dadurch eine gleichmäßige Druckkraft über einen langen Zeitraum hinweg erreicht wird, die sich auch nicht durch Temperatureinflüsse oder Feuchtigkeit oder Verschleiß der Scheiben innerhalb des mit der Ventileinheit ausgestatteten Gerätes verändert. Dadurch ergibt sich insbesondere, dass die miteinander korrespondierenden Ventilscheiben der Ventileinheit mit einer Druckkraft beaufschlagt werden, die exakt einstellbar ist. Darüber hinaus konnte festgestellt werden, dass durch die Umsetzung der Erfindung und die gegebenen, klar definierbaren Druckkräfte auch das Drehmoment zum Antrieb der drehbar gelagerten Ventilscheibe reduziert werden kann, was wiederum dazu führt, dass auch der Antrieb eine geringere Leistung aufweisen muss und damit in seiner Baugröße reduziert ist, was zur Einsparung von Bauraum und damit zu einer Kostenreduzierung führt. Die gesamte Ventileinheit wird folglich kompakter, als dies bei Lösungen des Standes der Technik der Fall ist.

Gemäß einer ersten Ausgestaltung der Erfindung wird vorgeschlagen, dass das Übertragungsmittel zentral an der ersten, drehbar gelagerten Ventilscheibe anliegt. Die zentrale, also mittige Anlage des Übertragungsmittels an der Ventilscheibe führt zu einer konstanten und sehr genau definierbaren Kraftübertragung der von der Druckfeder stammenden Druckkraft auf die Ventilscheibe. Mit dieser Lösung lässt sich zudem eine punktuelle Kraftübertragung erreichen beziehungsweise wird die Kraftübertragung hierbei auf eine sehr geringe Fläche der Ventilscheibe reduziert.

Eine weitere Verbesserung der Übertragung der Druckkraft auf die Ventilscheiben lässt sich erreichen, wenn das Übertragungsmittel die von der Druckfeder erzeugte Druckkraft in axialer Richtung auf die erste Ventilscheibe überträgt. Auch diese Lösung stellt einen ganz wesentlichen Unterschied zu der eingangs beschriebenen, bekannten Ausführung dar, bei der die Druckkraft indirekt über einen Dichtungsträger und eine Dichtung, also lediglich mittelbar auf die Ventilscheiben übertragen wird. Erfindungsgemäß sind somit die Ventilscheiben und das Übertragungsmittel koaxial zueinander angeordnet.

Als Übertragungsmittel kann beispielsweise ein Stift, eine Kugel, ein Stempel oder ein speziell ausgebildetes Kupplungsglied zum Einsatz kommen, worauf im Einzelnen nachfolgend noch näher eingegangen wird.

Um den Fertigungsaufwand einer Ventileinheit nach der Erfindung zu reduzieren, ist es von Vorteil, wenn das Übertragungsmittel und die Druckfeder als eine Baueinheit ausgeführt sind. Diese Baueinheit lässt sich somit vorab montieren und in die Ventileinheit einsetzen.

Wird darüber hinaus das Übertragungsmittel als Stift ausgeführt, so kann dieser eine Doppelfunktion erfüllen, die neben der Kraftübertragung der von der Druckfeder stammenden Druckkraft auf die Ventilscheibe und der damit einhergehenden Vermeidung von Leckagen zwischen den Ventilscheiben, auch darin besteht, dass der Stift die Drehachse für wenigstens ein Zahnrad der als Getriebe ausgeführten Übertragungsmechanik bildet. Auch diese Maßnahme führt dazu, dass die Ventileinheit insgesamt kompakter ausgeführt werden kann und damit ein geringeres Bauvolumen aufweist.

Eine weiterbildende Maßnahme dieses Lösungsvorschlages besteht darin, dass das als Stift ausgeführte Übertragungsmittel die als Getriebe ausgeführte Übertragungsmechanik vollständig durchdringt und die Druckfeder außerhalb dieser Übertragungsmechanik angeordnet ist. Die Anordnung der Druckfeder außerhalb der Übertragungsmechanik bedeutet auch eine bessere Zugänglichkeit zu der Druckfeder, was insbesondere den Vorteil mit sich bringt, dass die Druckfeder auf einfache Weise auf ihre Funktionsweise hin kontrolliert und erforderlichenfalls ausgetauscht werden kann, wenn sie die erforderlichen Parameter nicht mehr erfüllen sollte. Darüber hinaus wird die gemäß diesem Vorschlag angeordnete Druckfeder nicht mit Flüssigkeiten beaufschlagt oder mit Temperaturschwankungen belastet, die innerhalb der Ventileinheit und insbesondere innerhalb der Übertragungsmechanik auftreten können. Damit bringt diese Ausgestaltungsvariante der Erfindung gleich mehrere Vorteile mit sich.

Eine weitere, sehr vorteilhafte Ausführung der Erfindung ist darin zu sehen, dass das als Kugel ausgebildete Übertragungsmittel einen Bestandteil eines Feder-Druckstückes bildet, dessen Druckfeder in einer in dem Gehäuse gelagerten Hülse aufgenommen ist. Das als Kugel ausgebildete Übertragungsmittel überträgt die von der Druckfeder stammende Druckkraft punktuell auf die Ventilscheibe und ist zudem Bestandteil einer kompakten Baueinheit, die fertigungstechnisch betrachtet, vorgefertigt werden kann, sodass sich die Montage der Ventileinheit damit insgesamt vereinfacht. Neben einer Kosteneinsparung bei der Herstellung ergibt sich damit auch der Vorteil, dass die Baugruppe auf einfache Weise ausgetauscht werden kann, wenn beispielsweise die Druckfeder Ermüdungserscheinungen aufweist und nicht mehr die erforderlichen Parameter erfüllt.

Ein weiterer Lösungsvorschlag zur Ausführung einer erfindungsgemäßen Ventileinheit besteht darüber hinaus darin, dass das als Stempel ausgebildete Übertragungsmittel einen, verglichen mit seinem Stempelabschnitt, geringeren Querschnitt aufweisenden, die Druckfeder aufnehmenden Schaft aufweist, der an seinem dem Stempelabschnitt gegenüberliegenden Ende mittels eines Kugellagers in dem Gehäuse gelagert ist. Diese, ebenfalls als Baueinheit ausführbare Variante des Übertragungsmittels hat die zuvor bereits erwähnten Vorteile, vorgefertigt werden zu können und als Baueinheit austauschbar zu sein. Darüber hinaus stellt die Lagerung des als Stempel ausgeführten Übertragungsmittels in Kombination mit einem Kugellager eine sehr leichtgängige, eine geringe Reibung aufweisende Lösung dar, die jedoch etwas aufwendiger ausgeführt ist, als die zuvor erwähnten Ausführungen.

Um den Fertigungsaufwand zur Herstellung einer erfindungsgemäßen Ventileinheit weiter zu reduzieren und zusätzlich Gewicht einzusparen kann darüber hinaus gemäß einer Ausgestaltung der zuvor beschriebenen Ausführung des Übertragungsmittels als Stempel der Stempel aus einem Kunststoff bestehen.

Das als Kupplungsglied ausgebildete Übertragungsmittel weist entsprechend einer vorteilhaften, jedoch sehr speziellen Weiterbildung der Erfindung auf seiner der drehbar gelagerten Ventilscheibe zugewandten Seite eine formschlüssig in die Ventilscheibe eingreifende oder kraftschlüssig an der Ventilscheibe anliegende Kontur auf und nimmt auf seiner der Ventilscheibe gegenüberliegenden Rückseite die Druckfeder und ein Kugellager auf. Mit dieser sehr kompakten Bauweise lässt sich eine optimierte Kraftübertragung von der Druckfeder auf die Ventilscheibe erreichen. Zudem wird durch diese Maßnahme die Anbindung zwischen Ventilscheibe und Übertragungsmechanismus maßgeblich verbessert.

Eine zusätzliche, sehr vorteilhafte Lösung ist darüber hinaus darin zu sehen, dass das Kugellager und die Druckfeder als eine Baueinheit ausgeführt sind. Beide Elemente können somit aus dem gleichen Werkstoff, also beispielsweise aus Stahl oder aus Kunststoff hergestellt und als ein Stück verbaut werden, was eine wesentliche, fertigungstechnische- und Montagevereinfachung bedeutet.

Bei dem Kugellager zur Lagerung des Übertragungsmittels kann es sich beispielsweise um ein Axialkugellager oder ein Radialkugellager handeln.

Darüber hinaus ist festzuhalten, dass es einen wesentlichen Vorteil darstellt, die Ventilscheiben der erfindungsgemäßen Ventileinheit in an sich bekannter Weise aus einem Keramikwerkstoff herzustellen, da dieser sowohl gegenüber Flüssigkeiten, als auch Temperatureinflüssen beständig ist. Keramik weist zudem hinsichtlich der Druckkraftübertragung Eigenschaften, wie beispielsweise eine hohe Festigkeit und einen geringen Verschleiß auf, die für die Erfindung nutzbar sind. Darüber hinaus ist eine Ventilscheibe aus einem keramischen Werkstoff sehr wirtschaftlich herstellbar.

Bei der erfindungsgemäßen Übertragungsmechanik handelt es sich bevorzugt um ein Getriebe, wobei insbesondere Planetengetriebe eine geringe Baugröße bei optimaler Kraftübertragung aufweisen und damit in erfindungsgemäße Weise den Vorteil mit sich bringen, dass die gesamte Ventileinheit sehr kompakt ausgeführt werden kann und wenig Bauraum innerhalb eines mit der Ventileinheit ausgestatteten Gerätes erfordert.

Für sämtliche, der zuvor erwähnten, das Übertragungsmittel aufnehmenden Baueinheiten gilt, dass die Druckfeder eine Spiralfeder, Blattfeder oder eine Tellerfeder sein kann. Maßgeblich für die Auswahl des Federelements ist dabei, dass dieses eine möglichst lange Lebensdauer bei gleichbleibender Erzeugung der Druckkraft aufweist.

Wie eingangs bereits erwähnt wurde, wird die drehbar gelagerte Ventilscheibe über eine Übertragungsmechanik und einen die Übertragungsmechanik bewegenden Antrieb in Bewegung versetzt. Bei dem Antrieb kann es sich in bevorzugter Weise um einen Elektromotor handeln, der beispielsweise ein Schrittmotor sein kann. Häufig kommt es bei einer Ventileinheit vor, dass die Ventilscheibe lediglich um wenige Winkelgrade verstellt werden muss, um einzelne Fluidwege freizugeben oder zu verschließen. Hierfür ist insbesondere der erwähnte Schrittmotor von Vorteil.

Gegenstand der Erfindung ist auch ein Getränkeautomat, der mit einer erfindungsgemäßen Ventileinheit ausgestattet ist, wobei die Ventileinheit als kompakte Baueinheit zur Steuerung der Fluidströme innerhalb des Strömungsleitungssystems des Getränkeautomaten ausgelegt ist und der Getränkeautomat zur Ansteuerung des Antriebs der Ventileinheit eine elektronische Steuerungsvorrichtung aufweist. Bei dem erwähnten Getränkeautomaten kann es sich zum Beispiel um einen Kaffeevollautomaten handeln. Selbstverständlich kann ein derartiger Getränkeautomat mehrere der erfindungsgemäßen Ventileinheiten aufweisen.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine Schnittdarstellung durch eine erste Variante einer Ventileinheit in perspektivischer Ansicht,
- Figur 2:: eine Explosivdarstellung der Ventileinheit aus Figur 1,
- Figur 3:: eine zweite Ausführungsvariante einer Ventileinheit mit einem kugelförmigen Übertragungsmittel in einer Schnittdarstellung,
- Figur 4:: das Übertragungsmittel aus der in der Figur 3 dargestellten Ventileinheit, als isolierte Baueinheit,
- Figur 5:: eine dritte Ausführungsvariante einer Ventileinheit mit einem stempelförmigen Übertragungsmittel in einer Schnittdarstellung,
- Figur 6:: das Übertragungsmittel aus der in der Figur 5 dargestellten Ventileinheit, als isolierte Baueinheit,
- Figur 7:: eine alternative Ausführung eines Übertragungsmittels der in der Figur 5 dargestellten Ventileinheit, als isolierte Baueinheit,
- Figur 8:: eine vierte Ausführungsvariante einer Ventileinheit mit einem speziellen Übertragungsmittel in einer Schnittdarstellung,
- Figur 9:: eine Baueinheit, bestehend aus einer Druckfeder und einem Kugellager zur Aufbringung einer Druckkraft auf das Übertragungsmittel gemäß Figur 8,
- Figur 10:: einen Getränkeautomaten mit einer erfindungsgemäßen Ventileinheit.

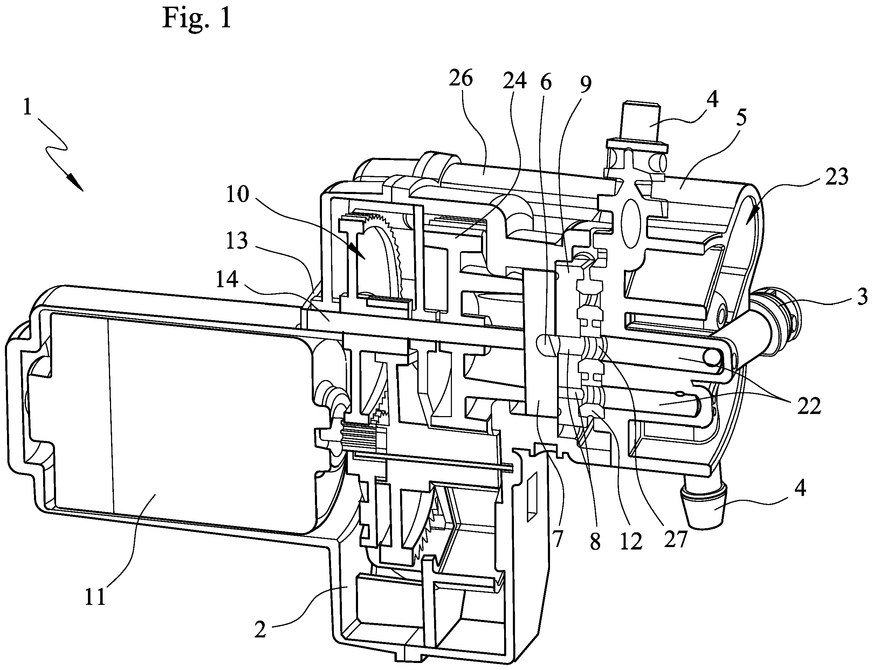

Die Figur 1 zeigt eine Schnittdarstellung durch eine erste Variante einer Ventileinheit 1 in perspektivischer Ansicht. Diese Ventileinheit 1 weist ein Gehäuse 2 auf, das durch einen Deckel 26 verschlossen ist und der damit einen Bestandteil des Gehäuses 2 bildet. An dem Deckel 26 ist darüber hinaus ein Ventilkopf 5 befestigt, der auch einstückig an dem Deckel 26 ausgebildet sein kann und in dem mehrere Fluidkammern 23 und Strömungskanäle 22 vorhanden sind. Zur Zuführung der Fluide weist der Ventilkopf 5 ferner Zulaufanschlüsse 3 und zur Abführung der Fluide aus der Ventileinheit 1 Ablaufanschlüsse 4 auf. Fluide, die innerhalb der Ventileinheit 1 strömungstechnisch geführt werden, können sowohl Flüssigkeiten, als auch Gase sein. Innerhalb des Gehäuses 2 und des Deckels 26 befinden sich ferner die für die Funktion der Ventileinheit 1 erforderlichen Bauelemente und Aggregate. Hierzu zählen insbesondere ein Antrieb 11, der mit einer als Getriebe ausgelegten Übertragungsmechanik 10 gekoppelt ist sowie zwei koaxial zueinander angeordnete und aufeinander folgende Ventilscheiben 7 und 9, die vorliegend aus einem Keramikwerkstoff bestehen, wobei die Ventilscheibe 7 drehbar innerhalb des Gehäuses 2 gelagert und die Ventilscheibe 9 feststehend in dem Gehäuse 2 angeordnet ist. Die Ventilscheibe 7 weist Strömungsöffnungen 6 und die Ventilscheibe 9 Durchlassöffnungen 8 auf, um die zuvor erwähnte Strömungsleitung zu ermöglichen. Eine über den als Elektromotor ausgeführten Antrieb 11 eingeleitete und über die als Getriebe ausgeführte Übertragungsmechanik 10 übersetzte Drehbewegung wird auf die Ventilscheibe 7 übertragen, sodass durch die Verstellbewegung der drehbar gelagerten Ventilscheibe 7 in Abhängigkeit von ihrer Stellung verschiedene Fluidströmungswege freigegeben oder verschlossen werden können. Die Übertragung der Drehbewegung auf die Ventilscheibe 7 erfolgt bei dem in Figur 1 gezeigten Beispiel letztlich mittels des Zahnrades 24. Die erfindungsgemäße Besonderheit besteht vorliegend darin, dass zur Vermeidung von Leckagen zwischen den Ventilscheiben 7 und 9 von der Druckfeder 13 eine Druckkraft erzeugt und auf die drehbar gelagerte, erste Ventilscheibe 7 übertragen wird, wobei zur Übertragung der Druckkraft hierbei ein als Stift ausgeführtes Übertragungsmittel 14 dient. Der Stift 14 liegt dabei koaxial zur Mittenachse der Ventilscheiben 7 und 9 an der Rückseite der Ventilscheibe 7 an und überträgt die besagte Druckkraft auf die Ventilscheibe 7. Die Druckfeder 13 befindet sich hierbei außerhalb der Übertragungsmechanik 10 und ist damit an der der Ventilscheibe 7 gegenüberliegenden Seite des Stiftes 14 angeordnet. Die aneinander anliegenden Ventilscheiben 7 und 9 werden, in axialer Richtung einander folgend angeordnet, wobei sich an die feststehend angeordnete Ventilscheibe 9 gehäuseseitig eine Dichtung 12 aus einem Silikonwerkstoff anschließt, die ihrerseits zahlreiche Öffnungen 27 zur Strömungsführung aufweist. Der Vorteil einer derartigen Ausführung einer Ventileinheit 1 besteht in der geringen Federkrafttoleranz und der optimalen Übertragung der Andruckkraft von der Druckfeder 13 auf die Ventilscheiben 7 und 9 bzw. auf die Dichtung 12. Darüber hinaus ist eine derartige Ventileinheit 1 sehr robust und kompakt aufgebaut.

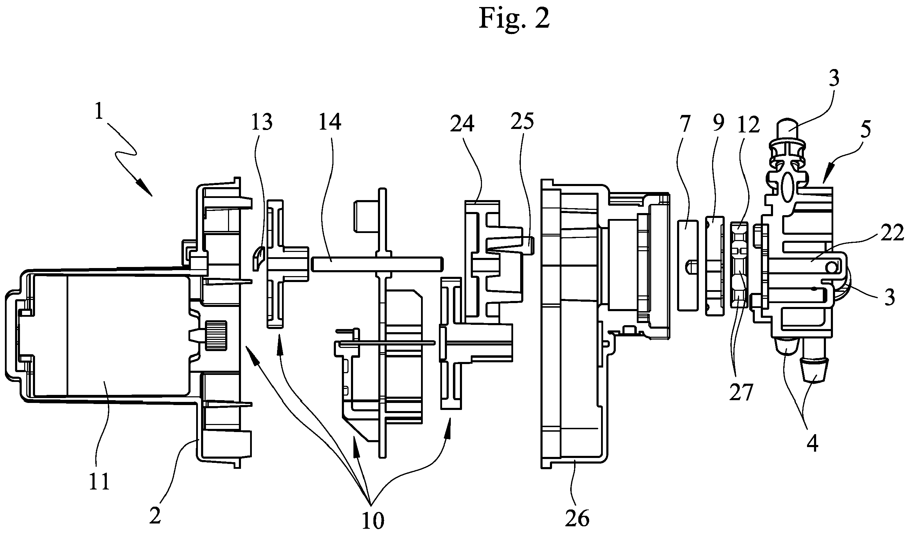

Aus der Figur 2 geht eine Explosivdarstellung der Ventileinheit 1 aus Figur 1 hervor, die in verbesserter Weise den Aufbau der Ventileinheit 1 zeigt. Hieraus geht beispielsweise auch hervor, dass das Zahnrad 24 auf seiner der Ventilscheibe 7 zugewandten Seite einen Eingriffsnocken 25 aufweist der in eine korrespondierende Kontur der Ventilscheibe 7 eingreift, sodass auf diese Weise eine Drehbewegung auf die Ventilscheibe 7 übertragen werden kann. Deutlich wird aus der Darstellung der Figur 2 ferner, dass die Ventileinheit 1 im Wesentlichen aus dem Gehäuse 2, einem das Gehäuse 2 verschließenden Deckel 26 und dem auf den Deckel 26 aufgesetzten Ventilkopf 5 besteht.

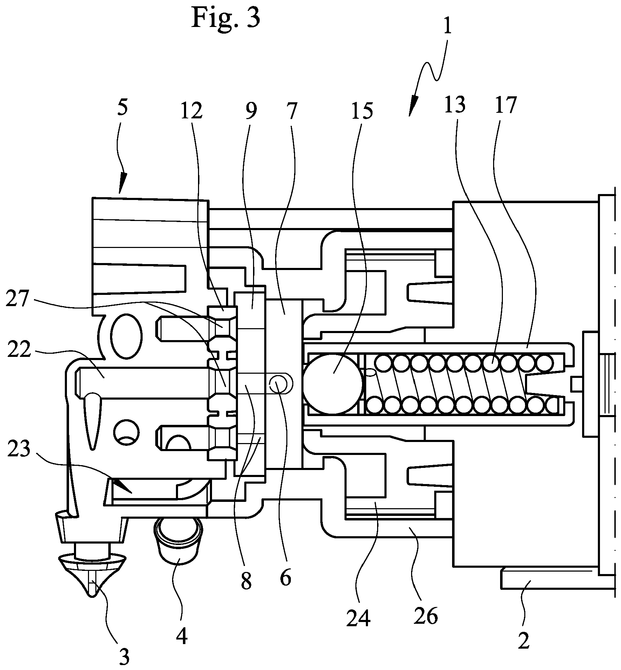

Die Figur 3 veranschaulicht eine zweite Ausführungsvariante einer Ventileinheit 1 mit einem kugelförmigen Übertragungsmittel 15 in einer Schnittdarstellung. Diese Ventileinheit 1 ist im Wesentlichen baugleich ausgeführt zu der zuvor bereits im Zusammenhang mit der Beschreibung der Figur 1 beschriebenen Ventileinheit 1. Der wesentliche Unterschied besteht hierbei darin, dass als Übertragungsmittel 15 ein Feder-Druckstück Verwendung findet, das aus einer Hülse 17 besteht, in der eine Druckfeder 13 bewegbar gelagert ist, die mit ihrer der Ventilscheibe 7 zugewandten Seite eine Druckkraft auf das als Kugel 15 ausgebildete Übertragungsmittel ausübt. Diese Druckkraft wird auf die drehbar gelagerte Ventilscheibe 7 übertragen, sodass dadurch eine konstante Andruckkraft zwischen den Ventilscheiben 7 und 9 sowie der Dichtung 12 gegeben ist.

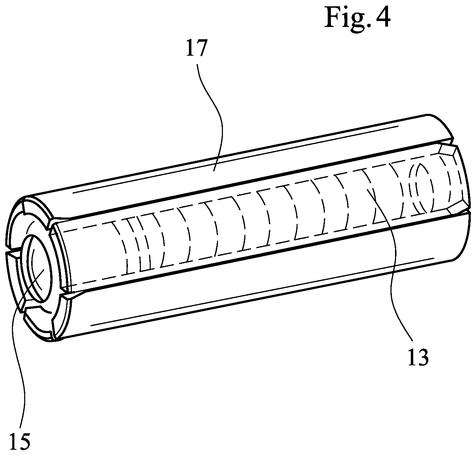

In der Figur 4 ist das Übertragungsmittel 15 aus der in der Figur 3 dargestellten Ventileinheit 1 als isolierte Baueinheit und in einer räumlichen Ansicht vergrößert dargestellt, sodass daraus der Aufbau dieser Baueinheit deutlich wird. Die innerhalb der Hülse 17 axial beweglich gelagerte Kugel 15 dient dabei als Übertragungsmittel der Druckkraft, die von der Druckfeder 13 erzeugt und auf die Ventilscheibe 7 übertragen wird.

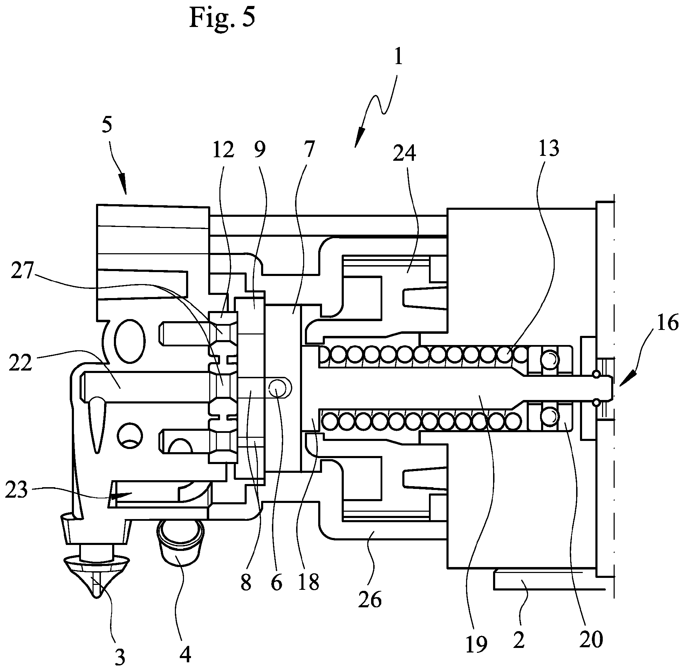

In der Figur 5 wird eine dritte Ausführungsvariante einer Ventileinheit 1 in einer Schnittdarstellung gezeigt, bei der ein stempelförmiges Übertragungsmittel 16 zum Einsatz kommt. Diese spezielle Ausführungsform einer Ventileinheit 1 weist im Unterschied zu den zuvor beschriebenen Varianten ein Übertragungsmittel 16 in Form eines Stempels auf, der an seiner der Ventilscheibe 7 anliegenden Seite über einen plattenförmigen Stempelabschnitt 18 verfügt, sodass dadurch eine Flächenkraft auf die Ventilscheibe 7 aufgebracht wird. Die Rückseite des Stempelabschnittes 18 dient der Anlage der Druckfeder 13, die einen Schaft 19 des Stempels 16 umgibt und an ihrer dem Stempelabschnitt 18 gegenüberliegenden Seite durch ein Kugellager 20 eine Wegbegrenzung erfährt. Das Kugellager 20 ist ebenfalls auf den Schaft 19 aufgesetzt und dient der Verbesserung der Lagerung des als Stempel ausgeführten Übertragungsmittels 16.

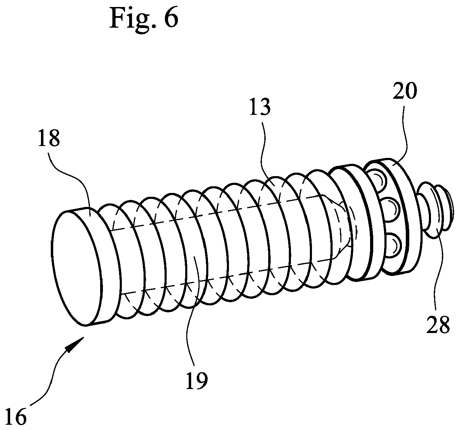

Das Übertragungsmittel 16 aus der in der Figur 5 dargestellten Ventileinheit 1, ist als isolierte Baueinheit in der Figur 6 in einer perspektivischen Ansicht gezeigt. Hieraus geht auch hervor, dass der Schaft 19 an seinem dem Stempelabschnitt 18 gegenüberliegenden Ende einen O-Ring 28 aufweist.

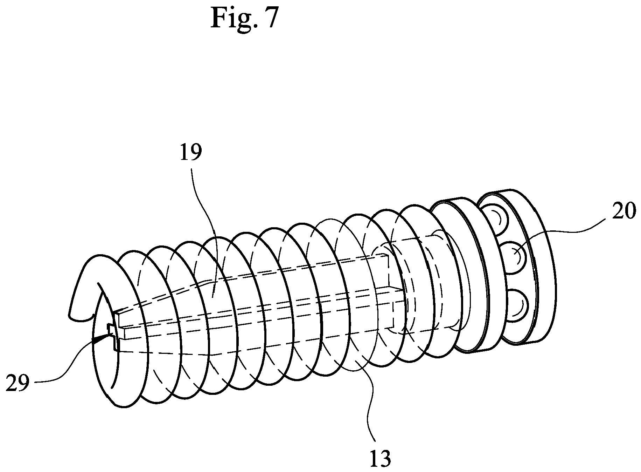

In der Figur 7 ist darüber hinaus eine alternative Ausführung eines Übertragungsmittels 16 dargestellt, wie es im Zusammenhang mit der Beschreibung der Figur 5 bereits erläutert wurde. Der Unterschied zu der im Zusammenhang mit der Figur 6 beschriebenen Variante eines als Stempel 16 ausgeführten Übertragungsmittels besteht vorliegend darin, dass dieser Stempel 16 hierbei kreuzförmig ausgeführt ist und aus insgesamt vier, rechtwinklig aufeinander stehenden Stegen besteht, deren sich verjüngende Kreuzspitze 29 an der Rückseite der Ventilscheibe 7 anliegt. Der plattenförmige Stempelabschnitt 18 dient bei dem gezeigten Beispiel einerseits als Anlagefläche für die Druckfeder 13 und auf der der Druckfeder 13 gegenüberliegenden Außenseite als Anlagefläche als Anlage für das Kugellager 20 zur Lagerung des Stempels 16.

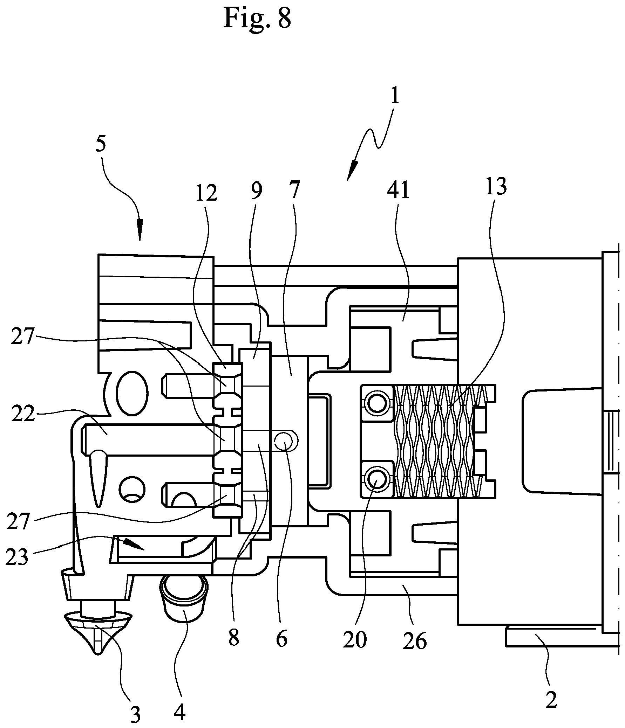

Die Figur 8 veranschaulicht eine vierte Ausführungsvariante einer Ventileinheit 1 mit einem speziellen Übertragungsmittel 41 in einer Schnittdarstellung. Das Übertragungsmittel 41 ist hierbei als ein Kupplungsglied ausgebildet und weist auf seiner der drehbar gelagerten Ventilscheibe 7 zugewandten Seite eine formschlüssig in die Ventilscheibe 7 eingreifende oder kraftschlüssig an der Ventilscheibe 7 anliegende Kontur auf. An der der Ventilscheibe 7 gegenüberliegenden Rückseite des Kupplungsgliedes 41 sind die Druckfeder 13 und ein Kugellager 20 in das Kupplungsglied 41 eingesetzt, wobei sich die Druckfeder 13 auf der dem Kugellager 20 gegenüberliegenden Seite an einem Gehäuseteil abstützt.

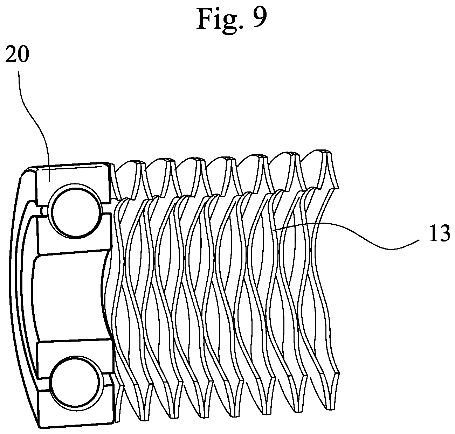

Die Besonderheit der in Figur 8 gezeigten Kombination aus einem Kugellager 20 und der Druckfeder 13 geht anschaulicher aus der Darstellung in Figur 9 hervor. Darin ist eine Baueinheit, bestehend aus der Druckfeder 13 und dem Kugellager 20 zur Aufbringung einer Druckkraft auf das Übertragungsmittel 41 gezeigt, wobei das Kugellager 20 und die Druckfeder 13 hierbei einstückig ausgebildet sind. Beide Elemente können aus einem metallischen Werkstoff oder aus Kunststoff bestehen. Die Auswahl des Werkstoffes richtet sich dabei nach den gegebenen Bedingungen innerhalb der Ventileinheit 1. Die Druckfeder 13 ist bei diesem Beispiel ziehharmonikaartig ausgeführt. Selbstverständlich ist die dargestellte Ausführungsform nicht zwingend. Vielmehr können das Kugellager 20 und die Druckfeder 13 auch zwei separate Bauteile sein.

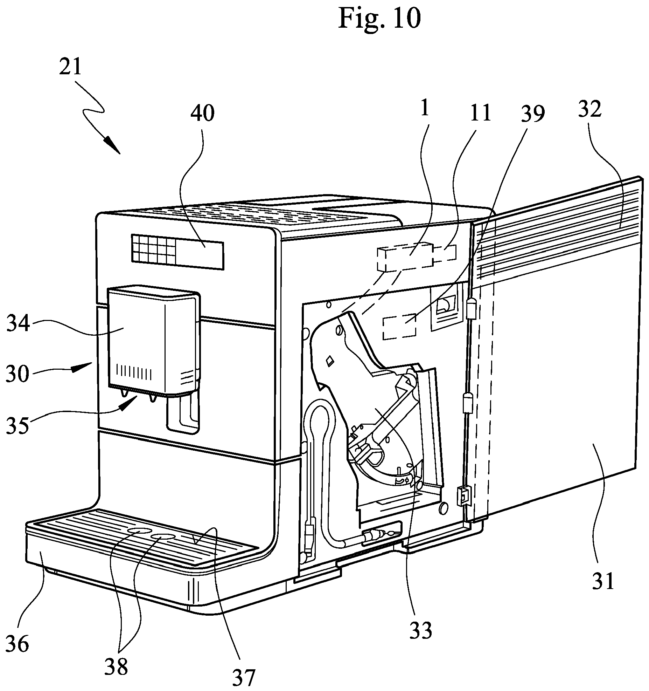

Schließlich ist in der Figur 10 ein Getränkeautomat 21 dargestellt, der mindestens eine erfindungsgemäße Ventileinheit 1 aufweist. Bei dem in einer perspektivischen Ansicht dargestellten Getränkeautomaten 21 handelt es sich um einen Kaffeevollautomaten in der Version eines freistehenden Einzelgerätes. Der Getränkeautomat 21 umfasst ein Automatengehäuse 30, dessen geöffnete Tür 31 teilweise einen Blick auf eine dahinter angeordnete Brüheinheit 33 erlaubt, in der ein Getränkesubstrat mit erhitztem Wasser aufgebrüht wird, sodass daraus ein Aufgussgetränk entsteht. Bei dem Getränkesubstrat handelt es sich hier vorwiegend um Kaffee. Da bei der Zubereitung eines Aufgussgetränkes Feuchtigkeit in Form von Wasserdampf freigegeben wird, ist die obere Seite der Tür 31 mit einer Vielzahl Lüftungsschlitzen 32 ausgestattet, die der Abführung der Feuchtigkeit aus dem Getränkeautomaten 21 dienen. Blickt man auf die Frontseite des Getränkeautomaten 21, so ist dort eine Ausgabeeinheit 34 erkennbar, die zwischen einem Höhenminimum und einem Höhenmaximum verstellbar ausgeführt ist und an ihrer Unterseite mehrere Auslaufdüsen 35 aufweist, über die beispielsweise das in dem Getränkeautomaten 21 hergestellte Aufgussgetränk abgegeben werden kann. Unterhalb der Ausgabeeinheit 34 befindet sich zum Aufstellen eines Gefäßes, in das das hergestellte Aufgussgetränk abgefüllt wird, eine Abstellfläche 36, die ein Abtropfblech 37 mit mehreren Ablauföffnungen 38 aufweist. Die Ablauföffnungen 38 dienen dazu, übergelaufene oder verspritzte Flüssigkeiten in eine unterhalb der Abstellfläche 36 angeordnete Auffangschale abzuführen, die jedoch in der Figur 10 nicht erkennbar ist. Die Auffangschale befindet sich in dem erkennbaren Vorsprung des Getränkeautomaten 21 und ist durch Gehäuseteile vor Sicht geschützt untergebracht. Oberhalb der Ausgabeeinheit 34 ist ferner eine Anzeige- und Eingabeeinheit 40 zur Visualisierung wichtiger Informationen und zur Eingabe von Werten beziehungsweise zur Auswahl von Menüpunkten vorhanden, die erforderlich sind, um unterschiedliche Getränke mit dem Getränkeautomaten 21 herstellen zu können oder Getränkezusätze zu den bereits hergestellten Aufgussgetränken hinzuzufügen. Um bei dem Beispiel des Kaffeeautomaten zu bleiben, kann auf diese Weise dem Kaffee beispielsweise Milch hinzugefügt oder es können verschiedene Kaffeegetränke ausgewählt werden. Zur Steuerung der einzelnen Prozesse des Getränkeautomaten 21 weist dieser eine in der Zeichnung lediglich andeutungsweise dargestellte, elektronische Steuerungsvorrichtung 39 auf. Die elektronische Steuerungsvorrichtung 39 dient dabei auch der Ansteuerung des Antriebs 11, bei dem es sich vorliegend um einen Elektromotor handelt und der einen Bestandteil der Ventileinheit 1 bildet. Die Ventileinheit 1 und der integrierte Elektromotor 11 sind in der Darstellung der Figur 10 ebenfalls lediglich andeutungsweise durch gestrichelte Linien dargestellt, da sie sich im Inneren des Getränkeautomaten 21 befinden. Es bedarf an dieser Stelle keiner besonderen Erwähnung, dass nicht nur eine, sondern auch mehrere Ventileinheiten 1 Bestandteil des Getränkeautomaten 21 sein können. Diese sind in das Strömungsleitungssystem des Getränkeautomaten 21 integriert und dienen in erfindungsgemäße Weise der Steuerung der Fluidkreisläufe.

### BEZUGSZEICHENLISTE:

- 1: Ventileinheit
- 2: Gehäuse
- 3: Zulaufanschluss
- 4: Ablaufanschluss
- 5: Ventilkopf
- 6: Strömungsöffnungen
- 7: Ventilscheibe (drehbar)
- 8: Durchlassöffnungen
- 9: Ventilscheibe (feststehend)
- 10: Übertragungsmechanik
- 11: Antrieb
- 12: Dichtung
- 13: Druckfeder
- 14: Übertragungsmittel (Stift)
- 15: Übertragungsmittel (Kugel)
- 16: Übertragungsmittel (Stempel)
- 17: Hülse
- 18: Stempelabschnitt
- 19: Schaft
- 20: Kugellager
- 21: Getränkeautomat
- 22: Strömungskanäle
- 23: Fluidkammern
- 24: Zahnrad
- 25: Eingriffsnocken
- 26: Deckel
- 27: Öffnungen
- 28: O-Ring
- 29: Kreuzspitze
- 30: Automatengehäuse
- 31: Tür
- 32: Lüftungsschlitze
- 33: Brüheinheit
- 34: Ausgabeeinheit

### FORTSETZUNG BEZUGSZEICHENLISTE:

- 35: Auslaufdüsen
- 36: Abstellfläche
- 37: Abtropfblech
- 38: Ablauföffnungen
- 39: elektronische Steuerungsvorrichtung
- 40: Anzeige- und Eingabeeinrichtung
- 41: Kupplungsglied

## Patentansprüche

1. Ventileinheit (1), umfassend ein Gehäuse (2) mit mindestens einem Zulaufanschluss (3) und wenigstens einem Ablaufanschluss (4), die Bestandteile eines Ventilkopfes (5) sind, wobei:
- innerhalb des Gehäuses (2) mindestens eine, Strömungsöffnungen (6) aufweisende, erste Ventilscheibe (7) drehbar gelagert ist, um in Abhängigkeit von ihrer Stellung in Zusammenwirkung mit einer weiteren, feststehend angeordneten und mit Durchlassöffnungen (8) versehenen Ventilscheibe (9) verschiedene Fluidströmungswege freizugeben oder zu verschließen,
- eine Übertragungsmechanik (10) zur Übertragung der von einem Antrieb (11) erzeugten Drehbewegung auf die drehbar gelagerte Ventilscheibe (7) vorhanden ist,
- zwischen der weiteren, feststehend angeordneten Ventilscheibe (9) und der dieser zugewandten Seite des Ventilkopfes (5) eine elastisch verformbare Dichtung (12) angeordnet ist,
- eine Druckfeder (13) zur Erzeugung einer definierten Druckkraft auf die drehbar gelagerte Ventilscheibe (7) vorhanden ist,
**dadurch gekennzeichnet, dass**
zur Übertragung der von der Druckfeder (13) erzeugten Druckkraft auf die drehbar gelagerte, erste Ventilscheibe (7) wenigstens ein Übertragungsmittel (14, 15, 16, 41) vorhanden ist.

2. Ventileinheit nach Anspruch 1,
**dadurch gekennzeichnet, dass**
das Übertragungsmittel (14, 15, 16, 41) zentral an der ersten Ventilscheibe (7) anliegt.

3. Ventileinheit nach einem der vorstehend genannten Ansprüche,
**dadurch gekennzeichnet, dass**
das Übertragungsmittel (14, 15, 16, 41) die von der Druckfeder (13) erzeugte Druckkraft in axialer Richtung auf die erste Ventilscheibe (7) überträgt.

4. Ventileinheit nach einem der vorstehend genannten Ansprüche,
**dadurch gekennzeichnet, dass**
das Übertragungsmittel (14, 15, 16, 41) ein Stift (14), eine Kugel (15), ein Stempel (16) oder ein Kupplungsglied (41) ist.

5. Ventileinheit nach einem der vorstehend genannten Ansprüche,
**dadurch gekennzeichnet, dass**
das Übertragungsmittel (14, 15, 16, 41) und die Druckfeder (13) als eine Baueinheit ausgeführt sind.

6. Ventileinheit nach einem der vorstehend genannten Ansprüche,
**dadurch gekennzeichnet, dass**
das Übertragungsmittel als Stift (14) ausgeführt ist, der die Drehachse für wenigstens ein Zahnrad der als Getriebe ausgeführten Übertragungsmechanik (10) bildet.

7. Ventileinheit nach einem der vorstehend genannten Ansprüche,
**dadurch gekennzeichnet, dass**
das als Stift (14) ausgeführte Übertragungsmittel die als Getriebe ausgeführte Übertragungsmechanik (10) vollständig durchdringt und die Druckfeder (13) außerhalb dieser Übertragungsmechanik (10) angeordnet ist.

8. Ventileinheit nach einem der Ansprüche 1 bis 5,
**dadurch gekennzeichnet, dass**
das als Kugel (15) ausgebildete Übertragungsmittel einen Bestandteil eines Feder-Druckstückes bildet, dessen Druckfeder (13) in einer in dem Gehäuse (2) gelagerten Hülse (17) aufgenommen ist.

9. Ventileinheit nach einem der Ansprüche 1 bis 5,
**dadurch gekennzeichnet, dass**
das als Stempel (16) ausgebildete Übertragungsmittel einen, verglichen mit seinem Stempelabschnitt (18), geringeren Querschnitt aufweisenden, die Druckfeder (13) aufnehmenden Schaft (19) aufweist, der an seinem dem Stempelabschnitt (18) gegenüberliegenden Ende mittels eines Kugellagers (20) in dem Gehäuse (2) gelagert ist.

10. Ventileinheit nach Anspruch 9,
**dadurch gekennzeichnet, dass**
der Stempel (16) aus einem Kunststoff besteht.

11. Ventileinheit nach einem der Ansprüche 1 bis 5,
**dadurch gekennzeichnet, dass**
das als Kupplungsglied (41) ausgebildete Übertragungsmittel auf seiner der drehbar gelagerten Ventilscheibe (7) zugewandten Seite eine formschlüssig in die Ventilscheibe (7) eingreifende oder kraftschlüssig an der Ventilscheibe (7) anliegende Kontur aufweist und auf seiner der Ventilscheibe (7) gegenüberliegenden Rückseite die Druckfeder (13) und ein Kugellager (20) aufnimmt.

12. Ventileinheit nach Ansprüche 9 bis 11,
**dadurch gekennzeichnet, dass**
das Kugellager (20) und die Druckfeder (13) als eine Baueinheit ausgeführt sind.

13. Ventileinheit nach einem der Ansprüche 9 bis 12,
**dadurch gekennzeichnet, dass**
das Kugellager (20) ein Axialkugellager oder ein Radialkugellager ist.

14. Ventileinheit nach einem der vorstehend genannten Ansprüche,
**dadurch gekennzeichnet, dass**
die Ventilscheiben (7, 9) aus einem Keramikwerkstoff bestehen.

15. Ventileinheit nach einem der vorstehend genannten Ansprüche,
**dadurch gekennzeichnet, dass**
es sich bei der Übertragungsmechanik (10) um ein Getriebe handelt.

16. Ventileinheit nach einem der vorstehend genannten Ansprüche,
**dadurch gekennzeichnet, dass**
es sich bei der Übertragungsmechanik (10) um ein Planetengetriebe handelt.

17. Ventileinheit nach einem der vorstehend genannten Ansprüche,
**dadurch gekennzeichnet, dass**
die Druckfeder (13) eine Spiralfeder, Blattfeder oder eine Tellerfeder ist.

18. Ventileinheit nach einem der vorstehend genannten Ansprüche,
**dadurch gekennzeichnet, dass**
der Antrieb (11) ein Elektromotor, beispielsweise ein Schrittmotor ist.

19. Getränkeautomat mit einer Ventileinheit nach einem der vorstehend genannten Ansprüche,
**dadurch gekennzeichnet, dass**
die Ventileinheit (1) als kompakte Baueinheit zur Steuerung der Fluidströme innerhalb des Strömungsleitungssystems des Getränkeautomaten (21) ausgelegt ist und der Getränkeautomat (21) zur Ansteuerung des Antriebs (11) der Ventileinheit (1) eine elektronische Steuerungsvorrichtung (39) aufweist.
